# EUROPÄISCHE PATENTSCHRIFT

(11) **EP 1 031 903 B1**
(45) Veröffentlichungstag und Bekanntmachung des Hinweises auf die Patenterteilung: **06.08.2003**
(21) Anmeldenummer: 00200512.2
(22) Anmeldetag: 14.02.2000
(51) Int. Cl.: G05F 1/46

(54) **Schaltungsanordnung zum Liefern eines Speisestromes**
Circuit configuration supplying an energizing current
Arrangement de circuit d'alimentation en courant

(30) Priorität: 23.02.1999 DE 19907575
(43) Veröffentlichungstag der Anmeldung: 30.08.2000
(73) Patentinhaber: Philips Intellectual Property & Standards GmbH, 20099 Hamburg (DE); Koninklijke Philips Electronics N.V., 5621 BA Eindhoven (NL)
(72) Erfinder: Feuser, Markus, Philips Corp. Intel. Prop. GmbH, 52064 Aachen (DE)
(74) Vertreter: Volmer, Georg, Dipl.-Ing.

(56) Entgegenhaltungen:
- EP-A- 0 442 391
- US-A- 4 813 024
- US-A- 4 932 053

## Beschreibung

Die Erfindung bezieht sich auf eine Schaltungsanordnung zum Liefern eines Speisestromes für eine elektronische Schaltung aus einer Versorgungsspannungsquelle.

Unter dem Begriff "Differential Power Analysis", im folgenden mit der Abkürzung DPA bezeichnet, ist ein Verfahren bekannt geworden, welches es erlaubt, durch Messung des Speisestromes einer elektronischen Schaltung bzw. durch Messung von Spannungseinbrüchen in der Versorgungsspannung, durch die der elektronischen Schaltung der Speisestrom zugeführt wird, neben einer Messung von Eingangs- und Ausgangssignalen der elektronischen Schaltung Erkenntnisse über in der elektronischen Schaltung ablaufende Vorgänge zu gewinnen. Insbesondere ist die DPA bekannt geworden als Analysemethode zum Ausforschen von kryptographierten Befehlen bzw. Daten in programmierbaren integrierten elektronischen Schaltungen für Identifikationseinrichtungen. Dies könnte sich auf die Sicherheit von Kreditkarten, Zugangskontrollen und dergleichen ungünstig auswirken.

Aus der EP 0 442 391 A2 ist eine Schaltungsanordnung zum Schützen eines Eingangs einer integrierten Schaltung, die aus einer Versorgungsspannungsquelle gespeist wird, vor Überspannungen bekannt.

Aus der US 4,932,053 ist eine Sicherheitsanordnung gegen unberechtigte Detektion geschützter Daten bekannt, die eine Schutzschaltung benutzt, um die betrügerische Praxis der Erforschung des Stromverbrauxhs an den Anschlüssen einer integrierten Schaltung während des Betriebs des Auslesens oder Einschreibens aus einem bzw. in einen Speicher zu verhindern. Diese Schutzschaltung löst gemäß einer in einem Generator erzeugten, pseudo-zufälligen Abfolge die Simulation von Stromverbrauchswerten aus, die identisch mit denen tatsächlicher Speicherzellen sind.

Aus der US 4,813,024 ist eine Fälschungsschutzanordnung für eine Speicherkarte bekannt, die einen Speicher vom EPROM-Typ oder einen ähnlichen, nicht-flüchtigen Speicher enthält, der zum Empfang vertraulicher Authorisierungsdaten sowie falscher oder andersartiger Resultate von Prüfungen dieser Authorisierungsdaten ausgebildet ist. Diese Fälschungsschutzanordnung umfaßt eine einzelne Simulationszelle, die zum aufzeichnen der nicht fehlerhaften Resultate ausgebildet ist. Diese Simulationszelle verbraucht denselben Strom wie eine nicht programmierte Speicherzelle des zum Aufzeichnen der falschen Daten ausgebildeten Speicherteils.

Die Erfindung hat die Aufgabe, eine Schaltungsanordnung zum Liefern eines Speisestromes für eine elektronische Schaltung zu schaffen, die das Gewinnen von Informationen über das Innere der elektronischen Schaltung aus einer Messung des Speisestromes bzw. der Versorgungsspannung ausschließt und damit eine unerwünschte Ausforschung von Einzelheiten der elektronischen Schaltung mit Mitteln der DPA verhindert.

Erfindungsgemäß wird diese Aufgabe gelöst durch eine Schaltungsanordnung gemäß dem unabhängigen Patentanspruch 1.

Durch die Maßnahmen der vorliegenden Erfindung werden der Speisestrom und die Versorgungsspannung der elektronischen Schaltung in einer Weise von innerhalb der elektronischen Schaltung ablaufenden Vorgängen unabhängig gemacht, die diesen Speisestrom und die Versorgungsspannung als mit Hilfe der DPA ausforschbare Meßgrößen unbrauchbar macht. Damit ist einem Angriff auf die elektronische Schaltung durch die DPA wirksam begegnet. Darüber hinaus bietet die Erfindung den Vorteil, daß der Speisestrom in einem gewissen Rahmen an den aktuellen Leistungsbedarf der elektronischen Schaltung angepaßt werden kann. Der Speisestrom ist erfindungsgemäß nicht während der gesamten Betriebsdauer der elektronischen Schaltung konstant, sondern wird dem aktuellen Leistungsbedarf der elektronischen Schaltung angepaßt, ohne daß dadurch Informationen über das Innere der elektronischen Schaltung nach außen hin verfügbar werden. Andererseits kann jedoch der Speisestrom bei geringerer Leistungsaufnahme der elektronischen Schaltung verringert werden und muß nicht stets einen Wert annehmen, der dem höchstmöglichen Leistungsbedarf der elektronischen Schaltung entspricht, d.h. dem Leistungsbedarf bei derjenigen Funktion der elektronischen Schaltung, für die die elektronische Schaltung die höchste elektrische Leistungsaufnahme aufweist. Dadurch wird bei der Energieversorgung der elektronischen Schaltung die Ausnutzung der zugeführten Leistung verbessert, ohne daß dem so erzielten, erhöhten Wirkungsgrad und der erhöhten Wirtschaftlichkeit die Sicherheit vor einem Angriff durch die DPA geopfert werden müßte.

Bei einer elektronischen Schaltung ist der Leistungsbedarf je nach Aufbau, Funktionsweise oder Betriebszustand unterschiedlich. Bei elektronischen Schaltungen, die mit CMOS-Bauteilen aufgebaut sind, welche durch ein Taktsignal synchron arbeiten, besteht der größte Leistungsbedarf zu einem Zeitpunkt, der den Flanken des Taktsignals in kurzem zeitlichem Abstand folgt. Tritt nun zu diesem Zeitpunkt ein besonders starker Anstieg des Leistungsbedarfs gegenüber den übrigen Zeitintervallen auf, kann dieser durch das Energiespeicherelement gedeckt werden. Durch die Energiezufuhr aus dem Energiespeicherelement an die elektronische Schaltung wird das Zeitintervall überbrückt, welches gegebenenfalls zum Umsteuern der Stromquellenanordnung benötigt wird, wenn ein solches Umsteuern sich zur Aufrechterhaltung einer ausreichenden Leistungszufuhr als erforderlich erweisen sollte. Dies ist insbesondere dann der Fall, wenn der erhöhte Leistungsbedarf zeitlich anhält. Durch die Vergleichsanordnung wird dabei erreicht, dass sich die Werte der elektronischen Schaltung zugeführten Speisespannung stets im zulässigen Spannungsbereich zwischen der ersten und der zweiten Referenzspannung befinden.

Eine vorteilhafte Ausgestaltung der erfindungsgemäßen Schaltungsanordnung ist gekennzeichnet durch eine zweite Referenzspannungsquelle zum Bereitstellen einer dritten Referenzspannung, die geringer ist als die erste Referenzspannung und einen Mindestwert der Speisespannung für das bestimmungsgemäße Funktionieren der elektronischen Schaltung darstellt, sowie durch eine Rücksetzanordnung, der die dritte Referenzspannung und die Speisespannung zum Vergleichen zugeführt werden und durch welche die elektronische Schaltung in einen Grundzustand zurückgesetzt wird, wenn die Speisespannung die dritte Referenzspannung unterschreitet.

Durch die Rücksetzanordnung wird somit für den Fall, dass auch die Zufuhr des zweiten Konstantstroms den Leistungsbedarf der elektronischen Schaltung nicht ausreichend decken kann, die elektronische Schaltung in ihren Grundzustand zurückgesetzt, um Fehlfunktionen zu vermeiden.

In einer weiteren Ausgestaltung enthält die erfindungsgemäße Schaltungsanordnung eine Umsteuerleitung, über die die Stromquellenanordnung von der elektronischen Schaltung unmittelbar umgesteuert wird. Dadurch kann insbesondere bei zeitlich genau vorbestimmten Funktionsabläufen in der elektronischen Schaltung einer vorhersehbaren Erhöhung des Leistungsbedarfs noch vor Ansprechen der Umsteuerung durch die Vergleichsanordnung entsprochen werden. Dadurch ist eine zusätzliche Flexibilität in der Leistungszufuhr zur elektronischen Schaltung geschaffen. Insbesondere kann so rechtzeitig vor einem Funktionsschritt der elektronischen Schaltung, bei dem eine besonders hohe Leistungsaufnahme auftritt, das Energiespeicherelement in einen für die Funktion der elektronischen Schaltung bestmöglichen Betriebszustand gebracht werden.

Ein Vorbestimmen des unmittelbaren Umsteuerns der Stromquellenanordnung durch einen vorgebbaren Funktionsablauf der elektronischen Schaltung ist insbesondere für den Fall einfach und wirkungsvoll ausführbar, dass die elektronische Schaltung als programmierbare Anordnung zur elektronischen Datenverarbeitung ausgebildet ist und dass diese elektronische Datenverarbeitung Umsteuerbefehle für die Stromquellenanordnung enthält.

Die erfindungsgemäße Schaltungsanordnung ist bevorzugt einsetzbar für Sicherheits- und Identifikationssysteme, insbesondere für solche, die mit Chipkarten oder elektronischen Etiketten ausgestattet sind. Besonders geeignet ist die erfindungsgemäße Schaltungsanordnung dabei für den Einsatz in den tragbaren Datenträgern derartiger Systeme, d.h. in den Chipkarten oder Etiketten selbst.

Ein Ausführungsbeispiel der Erfindung ist in der Zeichnung dargestellt und wird im nachfolgenden näher beschrieben. Es zeigen:
Fig. 1 ein blockschematisches Schaltbild eines beispielhaften Aufbaus der erfindungsgemäßen Schaltungsanordnung für einen tragbaren Datenträger, wie z.B. eine Chipkarte,
Fig. 2 ein Diagramm mit zeitlichen Verläufen verschiedener Ströme in der Schaltungsanordnung nach Fig. 1.

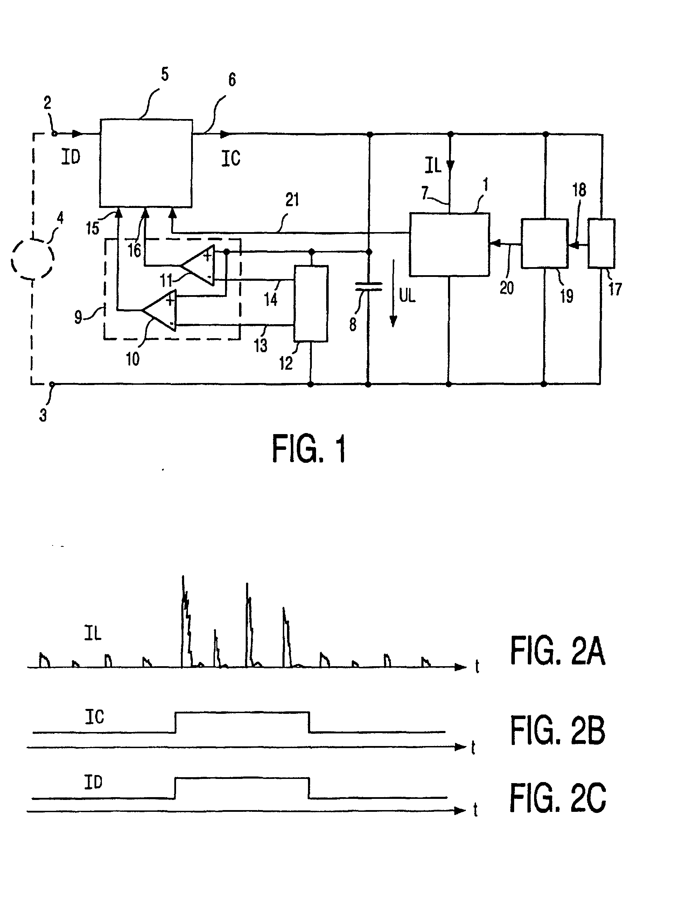

Die in Fig. 1 dargestellte Schaltungsanordnung umfasst eine elektronische Schaltung 1, die bevorzugt als integrierte, programmierbare Anordnung zur elektronischen Datenverarbeitung ausgebildet ist. Diese elektronische Schaltung 1 befindet sich auf einem Datenträger, insbesondere eine Chipkarte, die über einen Versorgungsspannungsquellenanschluss 2 und einen Masseanschluss 3 mit einer externen Versorgungsspannungsquelle 4 zum Liefern eines Speisestromes für die elektronische Schaltung 1 verbindbar ist. Aus der Versorgungsspannungsquelle 4 wird der Schaltungsanordnung über den Versorgungsspannungsquellenanschluss 2 ein Strom ID zugeführt. Der Versorgungsspannungsquellenanschluss 2 bildet zugleich einen Eingang einer steuerbaren Stromquellenanordnung 5, die an einem Ausgang 6 einen zeitlich konstanten Strom IC abgibt, der je nach Umsteuerzustand der steuerbaren Stromquellenanordnung 5 den Wert eines ersten oder eines zweiten vorbestimmten Konstantstroms annimmt.

Der Ausgang 6 der steuerbaren Stromquellenanordnung 5 ist mit einem Speisespannungseingang 7 der elektronischen Schaltung 1 sowie einem Anschluss eines als Kondensator ausgebildeten Energiespeicherelements 8 verbunden. Aus dem konstanten Strom IC vom Ausgang 6 der steuerbaren Stromquellenanordnung 5 wird einerseits ein Speisestrom IL für die elektronische Schaltung 1 an deren Speisespannungseingang 7 abgeleitet, andererseits fließt die Differenz zwischen diesem Speisestrom IL und dem Strom IC in das Energiespeicherelement 8 bzw. wird diesem entnommen. Über dem Energiespeicherelement 8, d.h. auch zwischen dem Speisespannungseingang 7 der elektronischen Schaltung 1 und dem Masseanschluss 3, bildet sich dadurch eine Speisespannung UL aus. Entsprechend den durch die in der elektronischen Schaltung 1 auftretenden Funktionsabläufe erzeugten Schwankungen des Speisestroms IL schwankt auch die Speisespannung UL am Energiespeicherelement 8 bzw. der elektronischen Schaltung 1.

Die Anordnung nach Fig. 1 umfasst weiterhin eine Vergleichsanordnung 9, die zwei Komparatorstufen 10, 11 umfasst, deren nichtinvertierende Eingänge mit dem Ausgang 6 der steuerbaren Stromquellenanordnung 5 verbunden sind und die somit die Speisespannung UL zugeführt erhalten. Eine erste Referenzspannungsquelle, die im Beispiel der Fig. 1 ebenfalls zwischen dem Ausgang 6 der steuerbaren Stromquellenanordnung 5 und dem Masseanschluss 3 angeordnet ist und somit ebenfalls aus der Speisespannung UL gespeist wird, ist mit dem Bezugszeichen 12 versehen und weist einen ersten Referenzspannungsausgang 13 zum Liefern einer ersten Referenzspannung sowie einen zweiten Referenzspannungsausgang 14 zum Liefern einer zweiten Referenzspannung auf. Die zweite Referenzspannung ist dabei gegenüber der ersten Referenzspannung größer. Beide Referenzspannungen bilden Grenzwerte für die im Betrieb der elektronischen Schaltung 1 zulässigen Werte der Speisespannung UL. Der erste Referenzspannungsausgang 13 ist mit einem invertierenden Eingang der ersten Komparatorstufe 10 der Vergleichsanordnung 9 verbunden, wohingegen der zweite Referenzspannungsausgang 14 mit einem invertierenden Eingang der zweiten Komparatorstufe 11 der Vergleichsanordnung 9 verbunden ist. Die Ausgänge der Komparatorstufen 10, 11 sind auf Steuereingänge 15 bzw. 16 der steuerbaren Stromquellenanordnung 5 geführt.

Die erste Komparatorstufe 10 ist somit derart angeordnet, dass am ersten Steuereingang 15 der steuerbaren Stromquellenanordnung 5 ein Wechsel des Wertes des hier anliegenden Umsteuersignals auftritt, wenn der Wert der Speisespannung UL bzw. - aus Gründen der einfacheren Ableitbarkeit der Spannungen - ein vorgegebener Bruchteil der Speisespannung UL unter den Wert der ersten Referenzspannung sinkt bzw. über diesen Wert ansteigt. Entsprechend ändert sich der Wert des Umsteuersignals am zweiten Steuereingang 16, wenn der zum Vergleich mit der zweiten Referenzspannung am zweiten Referenzspannungsausgang 14 herangezogene, aus der Speisespannung UL abgeleitete Spannungswert die zweite Referenzspannung überschreitet bzw. unter diese absinkt. Durch die Umsteuersignale an den Steuereingängen 15, 16 wird dann die steuerbare Stromquellenanordnung 5 derart gesteuert, dass der Strom IC am Ausgang 6 dem ersten vorbestimmten Konstantstrom entspricht, wenn die zweite Referenzspannung überschritten wird, und dass der Strom IC dem zweiten vorbestimmten Konstantstrom entspricht, wenn die erste Referenzspannung unterschritten wird. Die Speisespannung UL wird so stets im zulässigen Wertebereich gehalten, der durch die erste und die zweite Referenzspannung bestimmt wird.

In Fig. 1 ist weiterhin eine zweite Referenzspannungsquelle 17 dargestellt, die ebenfalls durch die Speisespannung UL gespeist wird und demgemäss zwischen dem Ausgang 6 der steuerbaren Stromquellenanordnung 5 und dem Masseanschluss 3 eingefügt ist. Durch diese zweite Referenzspannungsquelle 17 wird eine dritte Referenzspannung bereitgestellt, deren Wert geringer ist als der Wert der ersten Referenzspannung und die einen Mindestwert der Speisespannung UL für das bestimmungsgemäße Funktionieren der elektronischen Schaltung 1 darstellt. Über einen Referenzspannungsausgang 18 wird die dritte Referenzspannung von der zweiten Referenzspannungsquelle 17 einer Rücksetzanordnung 19 zugeführt. In die Rücksetzanordnung 19 wird andererseits über den Ausgang 6 der steuerbaren Stromquellenanordnung 5 und den Masseanschluss 3 auch die Speisespannung UL eingespeist, um dort mit der dritten Referenzspannung verglichen zu werden. Wenn die Speisespannung UL den Wert der dritten Referenzspannung unterschreitet, wird die elektronische Schaltung 1 über einen Rücksetzeingang 20 in ihren Grundzustand zurückgesetzt. Dadurch werden Fehlfunktionen in der elektronischen Schaltungsanordnung 1 durch eine zu geringe Speisespannung UL vermieden.

Die Schaltungsanordnung nach Fig. 1 zeigt weiterhin eine Umsteuerleitung 21, die von der elektronischen Schaltung 1 an einen weiteren Steuereingang der steuerbaren Stromquellenanordnung 5 geführt ist. Über die Umsteuerleitung 21 kann die steuerbare Stromquellenanordnung 5 von der elektronischen Schaltung 1 unmittelbar umgesteuert werden. Ein derartiges Umsteuern kann dann durch einen vorgebbaren Funktionsablauf der elektronischen Schaltung 1 vorbestimmt werden und noch vor Auftreten eines erhöhten oder verminderten Leistungsbedarfs der elektronischen Schaltung 1 vorgenommen werden. Dadurch kann die Lieferung des Speisestromes IL aus dem Strom IC bzw. aus dem Energiespeicherelement 8 noch vor einem Ansprechen der Vergleichsanordnung 9 den zu erwartenden Änderungen des Leistungsbedarfs der elektronischen Schaltung 1 angepasst werden. Dies ist einfach und vorteilhaft immer dann möglich, wenn die elektronische Schaltung 1 als programmierbare Anordnung zur elektronischen Datenverarbeitung ausgebildet ist und zur Ausführung vorgegebener Funktionsabläufe bzw. Befehle bestimmt ist, bei welcher Ausführung ein bekannter Leistungsbedarf zu erwarten ist.

Fig. 2 zeigt ein Beispiel für die Verläufe einiger in Fig. 1 aufgetragener Ströme über der Zeit t. Der in Fig. 2a) beispielhaft aufgetragene zeitliche Verlauf des Speisestroms IL am Speisespannungseingang 7 der elektronischen Schaltung 1 zeigt in einem ersten Zeitabschnitt einen typischen Stromverlauf für eine mit CMOS-Schaltungselementen aufgebaute elektronische Schaltung 1, die mit einem Taktsignal synchron arbeitet, für einen als Normalbetrieb bezeichneten Funktionsablauf mit verhältnismäßig wenigen Schaltvorgängen in jeder Taktperiode. An diesen schließt sich ein zweiter Zeitabschnitt mit einer hohen Anzahl von Schaltvorgängen in jeder Taktperiode an, der hier als intensiver Betrieb bezeichnet werden soll. Schließlich tritt wieder ein Zeitabschnitt mit Normalbetrieb auf.

Entsprechend dem unterschiedlichen Leistungsbedarf der elektronischen Schaltung 1 im Normalbetrieb einerseits und im intensiven Betrieb andererseits werden durch die steuerbare Stromquellenanordnung 5 während des Normalbetriebs ein erster vorbestimmter Konstantstrom und während des intensiven Betriebs ein zweiter vorbestimmter Konstantstrom geliefert. Dies zeigt Fig. 2b), in der der Strom IC dargestellt ist. In dem Strom IC treten die taktabhängigen Stromspitzen des Speisestroms IL nicht mehr auf. Lediglich die Bereiche Normalbetrieb und intensiver Betrieb lassen sich anhand der unterschiedlichen Konstantströme noch unterscheiden, wodurch jedoch keine verwertbare Information über einzelne Funktionsabläufe in der elektronischen Schaltung übermittelt werden. Zum Erzeugen dieses zeitlichen Verlaufs des Stromes IC wird der Versorgungsspannungsquelle 4 von der steuerbaren Stromquellenanordnung 5 über den Versorgungsspannungsquellenanschluss 2 ein zeitlich entsprechend verlaufender Strom ID entnommen, der in Fig. 2c) dargestellt ist.

Fig. 2 zeigt insbesondere eine Möglichkeit für die Funktionsweise der Umsteuerleitung 21. Der Übergang zwischen den vorbestimmten Konstantströmen erfolgt hier bereits vor Auftreten der ersten größeren Stromspitze im intensiven Betrieb. Umgekehrt wird der Strom IC bereits vor Auftreten der ersten Stromspitze des Normalbetriebs wieder zurückgeschaltet. Je nach Dimensionierung des Energiespeicherelements 8 im Verhältnis zum Leistungsbedarf der elektronischen Schaltung 1 und damit zum benötigten Speisestrom IL ergibt sich bei einer Steuerung über die Vergleichsanordnung 9 ein prinzipiell identisch geformter, jedoch zeitlich leicht verschobener Verlauf der Diagramme für die Ströme IC und ID.

## Patentansprüche

1. Schaltungsanordnung zum Liefern eines Speisestromes (IL) für eine elektronische Schaltung (1) aus einer Versorgungsspannungsquelle (4),
**gekennzeichnet durch** eine steuerbare Stromquellenanordnung (5), die zum Liefern eines ersten und eines zweiten vorbestimmten Konstantstroms (IC) umsteuerbar ist, wobei der zweite Konstantstrom größer ist als der erste Konstantstrom, und deren Eingang (2) mit der Versorgungsspannungsquelle (4) und deren Ausgang (6) mit einem Energiespeicherelement (8) und der elektronischen Schaltung (1) verbunden ist, **durch** eine erste Referenzspannungsquelle (12) zum Bereitstellen einer ersten (an 13) und einer dieser gegenüber größeren zweiten (14) Referenzspannung sowie **durch** eine Vergleichsanordnung (9) zum Vergleichen einer an der elektronischen Schaltung (1) und dem Energiespeicherelement (8) **durch** Zufuhr des Speisestromes (IL) hervorgerufenen Speisespannung (UL) mit der ersten (13) und der zweiten (14) Referenzspannung und zum Umsteuern der Stromquellenanordnung (5) auf den ersten Konstantstrom, wenn die Speisespannung (UL) die zweite Referenzspannung (14) überschreitet, bzw. auf den zweiten Konstantstrom, wenn die Speisespannung (UL) die erste Referenzspannung (13) unterschreitet.

2. Schaltungsanordnung nach Anspruch 1,
**gekennzeichnet durch** eine zweite Referenzspannungsquelle (17) zum Bereitstellen einer dritten Referenzspannung (18), die geringer ist als die erste Referenzspannung (13) und einen Mindestwert der Speisespannung (UL) für das bestimmungsgemäße Funktionieren der elektronischen Schaltung (1) darstellt, sowie **durch** eine Rücksetzanordung (19), der die dritte Referenzspannung (18) und die Speisespannung (UL) zum Vergleichen zugeführt werden und **durch** welche die elektronische Schaltung (1) in einen Grundzustand zurückgesetzt wird, wenn die Speisespannung (UL) die dritte Referenzspannung 18) unterschreitet.

3. Schaltungsanordnung nach Anspruch 1 oder 2,
**gekennzeichnet durch** eine Umsteuerleitung (21), über die die Stromquellenanordnung (5) von der elektronischen Schaltung (1) unmittelbar umgesteuert wird.

4. Schaltungsanordnung nach Anspruch 3,
**dadurch gekennzeichnet, daß** das unmittelbare Umsteuern durch einen vorgebbaren Funktionsablauf der elektronischen Schaltung (1) vorbestimmt ist.

5. Schaltungsanordnung nach Anspruch 4,
**dadurch gekennzeichnet, daß** die elektronische Schaltung (1) als programmierbare Anordnung zur elektronischen Datenverarbeitung ausgebildet ist und daß diese elektronische Datenverarbeitung Umsteuerbefehle für die Stromquellenanordnung (5) enthält.

6. Chipkarte,
**gekennzeichnet durch** eine Schaltungsanordnung nach einem der vorhergehenden Ansprüche.

## Claims

1. A circuit arrangement for delivering a supply current (IL) for an electronic circuit (1) from a supply voltage source (4), **characterized in that** the arrangement includes a controllable current source arrangement (5) which can be switched over so as to deliver a first and a second predetermined constant current (IC), the second constant current being larger than the first constant current, its input (2) being connected to the supply voltage source (4) while its output (6) is connected to an energy storage element (8) and the electronic circuit (1), and also includes a first reference voltage source (12) for presenting a first (13) and a second reference voltage (14), being higher than the first reference voltage, as well as a comparison arrangement (9) for comparing a supply voltage (UL), produced in the electronic circuit (1) and the energy storage element (8) by the supply of the supply current (IL), with the first (13) and the second (14) reference voltage and for switching over the current source arrangement (5) to the first constant current when the supply voltage (UL) exceeds the second reference voltage (14) and to the second constant current when the supply voltage (UL) is lower than the first reference voltage (13).

2. A circuit arrangement as claimed in claim 1, **characterized in that**
it includes a second reference voltage source (17) for presenting a third reference voltage (18) which is lower than the first reference voltage (13) and represents a minimum value of the supply voltage (UL) for the specified operation of the electronic circuit (1), as well as a reset arrangement (19) which is supplied with the third reference voltage (18) and the supply voltage (UL) for the purpose of comparison and resets the electronic circuit (1) to a basic state when the supply voltage (UL) is less than the third reference voltage (18).

3. A circuit arrangement as claimed in claim 1 or 2, **characterized in that** it includes a switch-over lead (21) via which the current source arrangement (5) is switched over directly by the electronic circuit (1).

4. A circuit arrangement as claimed in claim 3, **characterized in that** the direct switching-over is predetermined by a selectable function execution in the electronic circuit (1).

5. A circuit arrangement as claimed in claim 4, **characterized in that** the electronic circuit (1) is constructed as a programmable arrangement for electronic data processing, and that the electronic data processing involves switch-over instructions for the current source arrangement (5).

6. A chip card, **characterized in that** it includes a circuit arrangement as claimed in one of the preceding claims.

## Revendications

1. Arrangement de circuit d'alimentation en courant (IL) pour un circuit électronique (1) à partir d'une source de tension d'alimentation (4),
**caractérisé par** un dispositif commandable de source de courant (5) qui peut être commuté pour la délivrance d'un premier et d'un deuxième courant constants (IC) préalablement déterminés, le deuxième courant constant étant supérieur au premier courant constant et dont l'entrée (2) est reliée à la source de tension d'alimentation (4) et la sortie (6) à un élément de mémoire d'énergie (8) et au circuit électronique (1) par une première source de tension de référence (12) pour fournir une première tension de référence (13) et une deuxième tension de référence (14) supérieure à celle-ci ainsi qu'un dispositif de comparaison (9) pour la comparaison d'une tension d'alimentation (UL) provoquée par l'alimentation du courant d'alimentation (IL) sur le circuit électronique (1) et l'élément de mémoire d'énergie (8) avec les première (13) et deuxième (14) tensions de référence et pour la commutation du dispositif de source de courant (5) sur le premier courant constant lorsque la tension d'alimentation (UL) dépasse la deuxième tension de référence (14) ou sur le deuxième courant constant lorsque la tension d'alimentation (UL) passe sous la première tension de référence (13).

2. Circuit selon la revendication 1,
**caractérisé par** une deuxième source de tension de référence (17) pour la fourniture d'une troisième tension de référence (18) qui est inférieure à la première tension de référence (13) et représente une valeur minimale de la tension d'alimentation (UL) pour le fonctionnement du circuit électronique (1) conforme à sa destination ainsi que par un dispositif de réinitialisation (19) auquel sont amenées la troisième tension de référence (18) et la tension d'alimentation (UL) à des fins de comparaison et par lequel le circuit électronique (1) est réinitialisé dans un état de base lorsque la tension d'alimentation (UL) passe sous la troisième tension de référence (18).

3. Circuit selon l'une des revendications 1 ou 2,
**caractérisé par** une ligne de commutation (21) par l'intermédiaire de laquelle le dispositif de source de courant (5) est commuté directement par le circuit électronique (1).

4. Circuit selon la revendication 3,
**caractérisé en ce que** la commutation directe est déterminée préalablement par une exécution de fonction à déterminer préalablement du circuit électronique (1).

5. Circuit selon la revendication 4,
**caractérisé en ce que** le circuit électronique (1) est conçu comme un dispositif programmable de traitement de données électroniques et que ce traitement de données électroniques contient des commandes de commutation pour le dispositif de source de courant (5).

6. Carte à puces,
**caractérisée par** un circuit selon l'une des revendications précédentes.
